(19) Europäisches Patentamt
European Patent Office
Office européen des brevets

(11) Publication number: 0 159 896 B1

# (12) EUROPEAN PATENT SPECIFICATION

(45) Date of publication of patent specification: 19.11.87

(51) Int. Cl.[4]: H 02 J 13/00

(21) Application number: 85302640.9

(22) Date of filing: 16.04.85

## (54) A Bi-directional multi-frequency ripple control system.

(30) Priority: 17.04.84 AU 4614/84

(43) Date of publication of application: 30.10.85 Bulletin 85/44

(45) Publication of the grant of the patent: 19.11.87 Bulletin 87/47

(84) Designated Contracting States: CH DE GB LI NL

(56) References cited: GB-A-2 022 890

(73) Proprietor: The Electricity Trust of South Australia
220 Greenhill Road
Eastwood South Australia (AU)

(72) Inventor: Foord, Peter Maxwell
220 Greenhill Road
Eastwood South Australia (AU)

(74) Representative: Watson, Anthony Stephen et al
Bailey, Walsh & Co 5 York Place
Leeds LS1 2SD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 159 896 B1

## Description

This invention relates to improvements in a ripple control system, that is, a means and method for transmitting and receiving information through an alternating current power distribution system.

### Background of the invention

Ripple control has been used in the past to transmit information from a power source to a load and thus afford remote control of that load, for example for control of water heaters, street lighting or the like.

Reference can be made to our Australian Patent No. 531592 (47714/79) (corresponding to GB—A—2022890, US—A—4359644, Canada 1127710, Switzerland 633388 and other overseas patents) which described and claimed a system for the control of loads wherein sequential wave form distortion (SWD) signals were transmitted from a power sub-station to a consumer, a transmitter at the sub-station being coupled to the system to derive power from the system and generate a signal the frequency of which was synthesised from and locked to the power frequency, imposing the signal on the power frequency wave form as a sequence of wave form distortions, and the receiver was also coupled to the system and had a detector circuit comprising a pair of correlators (synchronous filters) driven 90° out of phase with each other by a control frequency synthesised from and locked to the power frequency and synchronous with the signal frequency, such that the signal input to the correlators appeared as a D.C. voltage output thereof, a squaring circuit was coupled to the signal output of each correlator and a summing circuit coupled to the squaring circuits, arranged so as to square and sum the D.C. voltage outputs of the correlators.

The differences between the sequential wave form distortion (SWD) control and conventional ripple control are that the signal was produced as a sequence of wave form distortions by applying a controlled oscillatory load to the power system, the frequency of the signal being locked to the supply frequency, and the synchronous correlation method of signal detection was used.

A series of tests have indicated that the main advantage of the SWD control over other (prior art) ripple control is its simplicity and lower cost, and also that most of the receiver circuit can be contained in a custom integrated circuit together with a microcomputer chip and no components are critical. The signal magnitude required for SWD control is about 10 to 20 percent of that required for ripple control and the reduced signal magnitude avoids many of the problems of interference with consumer apparatus sometimes experienced with ripple control.

### Brief summary of the invention

The main object of this invention is to provide improvements to the SWD control system of aforesaid Patent 531592. In that patent there was described a synchronous filter wherein a pair of correlators were in quadrature and thereby were not phase sensitive. A code was utilised, employing closely spaced frequencies.

In this invention, improvements comprise a receiver wherein the receiver has a pair of synchronous filters driven 90° out of phase with each other, the outputs of which are squared and summed to form an output independent of phase, and further discrimination means comprising a microcomputer programmed for frequency checking of each synchronous filter output whereby frequency differences between the synchronous filter centre frequency and the incoming signal frequency are used to give complete rejection characteristics, thus producing a very narrow bandpass filter for the receiver detection system and enabling the use of a large number of closely spaced frequencies for the formation of signalling codes.

This improvement results in the synchronous filter of the receivers having a much narrower band pass characteristic. This enhancement allows the full noise rejection advantage of synchronous correlators to be retained together with non-phase sensitivity. The filter is so selective that frequencies as closely spaced as 0.2 Hz can be used to form a multifrequency system of coding. This results in a very large number of usable frequencies between 200 and 1000 Hz and hence groups of unique frequencies can be assigned to each sub-station of a power system and thus overcomes all problems due to spillover of signal from one substation to the next via the high voltage supply system.

More specifically, the invention consists of a transmitter for transmitting a code and a receiver for receiving said code, said transmitter being coupled to the distribution system to superimpose a signal on the power frequency waveform as a sequence of waveform distortions, said transmitter embodying frequency control means to accurately generate closely spaced frequencies to enable the use of multifrequency codes, and improvements comprising an input detector circuit in said receiver having two synchronous filters driven ninety degrees out of phase with each other, means for squaring and summing the synchronous filter outputs to form a non phase sensitive output, discrimination means comprising frequency checking means for the checking of frequency of each synchronous filter output whereby frequency differences between the synchronous filter centre frequency and the incoming signal frequency are used to give complete rejection characteristics to the filter thus producing a very narrow bandwidth filter.

The invention further relates to improvements enhancing the operation of the oscillating load transmitter circuit. By suitable arrangement of the thyristor firing signals the level of oscillation in the transmitter circuit can be controlled. This allows the level of oscillation to be set electronically rather than by heavy current component design.

These two enhancements enable the scheme to be used also for the transmission of information upstream from a load (ie consumer) to a power source (ie substation). Because oscillation of the transmitter circuit can be enhanced, circuit resistances are no longer critical to the level of oscillation. This is a significant factor in designing a low cost transmitter. Because multifrequency coding can be used decimal data (eg a meter reading) can be transmitted at a speed which is acceptable.

Data pertaining to various other aspects of electrical power transmission can also be transmitted back to a central sub-station, reducing the need for an operator to travel.

The transmitter and receiver costs for equipment in accordance with this invention are much lower than for conventional ripple control equipment. The extremely narrow-band pass filter of the receiver not only increases availability of a large number of signal frequencies but also gives much better rejection of noise signals than normal ripple control receivers and because of this a much lower level of signal power can be used. The low signal power enables a small transmitter to be used and this contributes to the low cost. The two correlators (ie, synchronous filters) can be built onto a silicon chip and require no critical components for tuning thus contributing to the low cost of the receivers, and this is enhanced by a micro-computer algorithm. The transmitter may be of very simple design and consist of a capacitor in series with an inductor and switched to the power supply system with a pair of inverse parallel connected thyristors. Control of the thrystors is such that the circuit is made to oscillate in a discontinuous manner at a selectable signal frequency. Critical tuning of the capacitor and inductor is not required, since the resonant frequency thereof is always greater than the signal frequency. By using different signalling frequencies at each sub-station the problem of signal spillover from one sub-station to another is removed. It is, however, important that the signal itself should lie within close limits, and, although use can be made of crystal control means to control signal frequency, the control means referred to in said GB—A—2022890 is equally as effective, and more cost effective than crystal control means.

The system synthesises identical control frequencies in both the transmitter and receiver. This control frequency is synthesised by multiplying the power supply frequency by an integer using a phase locked loop multiplier circuit and then dividing by another integer. The control frequency is then used in the transmitter to control the oscillation of the inductive capacitive load and in the receiver to control the centre frequency of the synchronous filter. In this way a very precise signal frequency can be transmitted which can be detected by a very narrow band-pass filter.

The input element of the receiver may consist of two synchronous filters each consisting of a pair of solid state (eg CMOS) change-over switches between a resistor and a capacitor. The change-over switches are driven by the control frequency but one filter is driven 90° out of phase with the other. The output frequency of these two filters will be equal to the difference between the signal frequency and the central frequency. Hence if the signal frequency is identical to the control frequency then the filter output frequency will be zero, that is a D.C. voltage. The total signal received is formed by combining the outputs from the two filters such that if P and Q are the separate outputs from each synchronous filter and S is the combined output then $S=\sqrt{P^2+Q^2}$. The discrimination range of the overall filter is made narrower by checking the frequency of both P and Q by timing between their zero crossings. The signal is rejected if the frequency of both P and Q is higher than a predetermined difference frequency. It is this feature which achieves the very narrow-band pass frequency range, and in turn makes available a large number of signal frequencies to be usable in a CODE, even though the signal frequency may be below 1000 Hz. Availability of a large number of CODES makes it viable to signal "upstream" data from the consumer.

When transmitting from a power source, for example a sub-station, the discontinuous oscillatory current in the large transmitter will distort the power system voltage in proportion to the rate of change of current, since the source impedance is almost entirely inductive. Hence a signal of the desired frequency is generated on the power system voltage as a sequence of wave form distortions.

A similar system is used for transmission in each direction. There is a difference, however, in that when transmitting "downstream" from a power source to a load the signal appears as a voltage superimposed on the power system voltage and when transmitting "upstream" from a load to a power source the signal appears as a current superimposed on the power system load current.

When transmitting from a load, that is from a consumer to a sub-station, the discontinuous oscillatory current of the small transmitter is isolated from the high voltage distribution lines at the sub-station by means of a current transformer. The output of the current transformer is passed through an impedance to convert it to a voltage then high pass filtered to remove most of the 50 Hz supply frequency. After amplification it is detected with the synchronous filter arrangement.

Brief description of the drawings

Reference is now made to the accompanying drawings, in which:

Figure 1 shows the basic transmitter,

Figure 2 shows, in simplified form, the system voltage and load current relationship of the basic transmitter,

Figure 3 shows the system arrangement for downstream transmission,

Figure 4 is a block diagram of the receiver,

Figure 5 is a circuit diagram of the receiver power supply,

Figure 6 shows the phase locked loop frequency synthesiser,

Figure 7 shows the synchronous filter arrangement used in the receiver,

Figure 8 shows the synchronous filter output,

Figure 9 shows the arrangement used for signal measurement,

Figure 10 shows the waveform of the two synchronous filter outputs herein designated P and Q,

Figure 11 shows the narrow band pass filter available with the invention, illustrating, by way of comparison, a typical prior art band pass width curve; a band pass width curve obtainable with our earlier Australian Patent 531,592; and in the very narrow band-pass width obtainable with this invention,

Figure 12 shows the current sensing means,

Figure 13 shows the contact sensing means,

Figure 14 indicates the basic arrangement for upstream signalling,

Figures 15A and 15B show a detail drawing of the overall receiver circuit,

Figure 16 illustrates the relationship between power frequency, thyristor firing pattern frequency, and oscillating current in the LC circuit,

Figure 17 shows the waveform when $V^1$ is high (above) and low (below) (compare Figure 16),

Figure 18 shows the pattern used for intermediate frequencies (eg 400 to 550 Hz), and

Figure 19 shows the pattern used for higher frequencies (eg above 550 Hz).

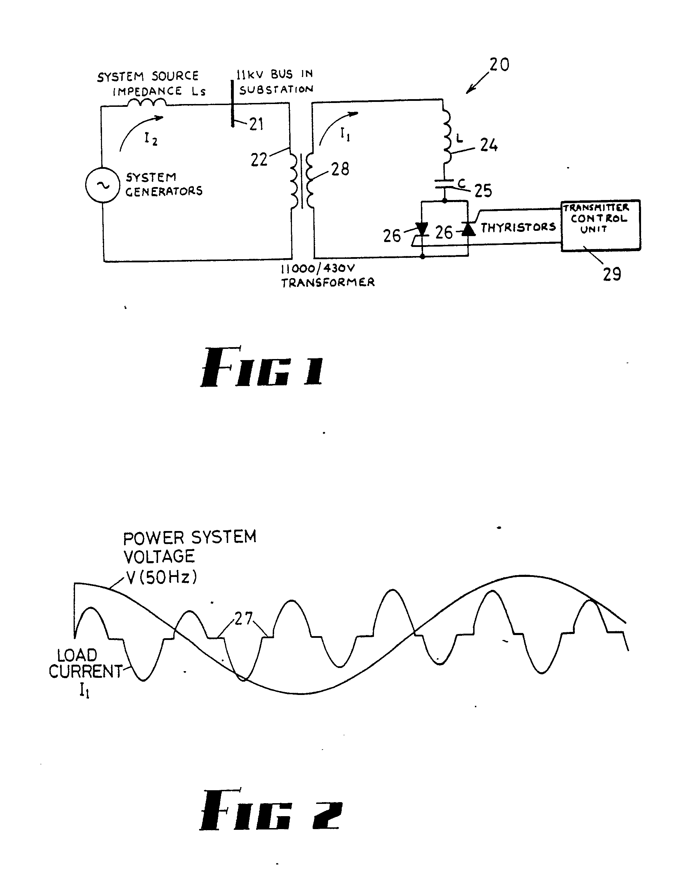

In the basic transmitter 20 (Figures 1, 2 and 3), a signal is produced on the distribution bus 21 (11kV or equivalent) of a sub-station which is then propagated via the 11 kV feeders 22 and 11 000/415 volt distribution transformers 23 to consumers. The signal appears at consumer premises between 240 volt active and neutral on all three phases simultaneously.

With SWD control, the signal generating circuit is a switched LC load 24, 25 and results in a substantially constant load current I.

The basic transmitter arrangement (in single phase form) is shown in Figure 1 and the load current relationship to the system voltage in Figure 2.

The transformer load consists of an air cored inductance 24 in series with a capacitor 25 and switched by means of inverse parallel connected thyristors 26. As shown in Figure 2, the load current does not flow continuously but has an "off" period 27 between each pulse. This off period is achieved by making the resonant frequency of the LC combination higher than 1.15 times the control frequency. The actual resonant frequency is not critical and hence it is not necessary to use expensive critically tuned components. The off period ensures the successful operation of the circuit and contributes to the simplicity of the design. Its presence causes the LC circuit to receive energy from the 50 Hz supply and hence oscillation can be maintained. The start of each current pulse is controlled by the firing of one or other of the thyristors by the control frequency (signalling frequency). The thyristors are commutated off as the current pulse goes to zero. This off period is varied with the arrangements which are described hereunder with reference to Figures 17, 18 and 19.

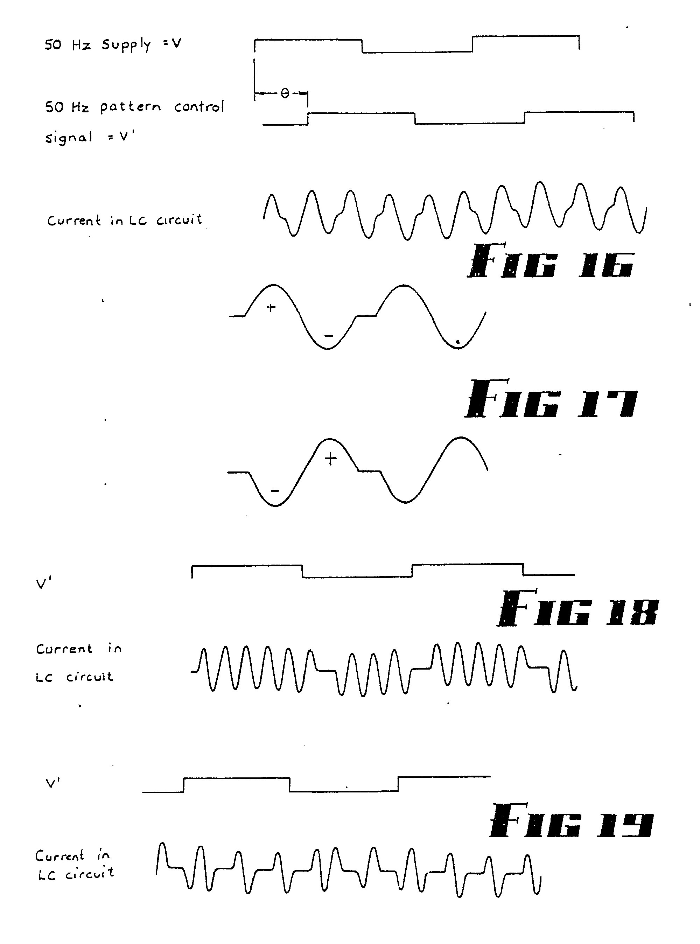

The operation of this circuit can be enhanced by suitable control of the thyristor firing signals from the transmitter control unit 29. This control fires the thyristors in a pattern, the pattern frequency being the same as the power system frequency V but phase shifted from it by angle 'θ' to 'V' as shown in Figure 16.

The thyristors are fired such that when V' is high oscillation current is continuous from the positive half cycle to the negative, and when V' is low oscillation current is continuous from the negative half cycle to the positive (Figure 17).

By varying the phase shift between V and V', ie θ, the magnitude of oscillation current in the LC circuit can be varied over at least a 4:1 range. In this way the oscillation current can be set to the desired level.

Further variations on this theme are then used depending on signal frequency. The arrangement just described is used for the lower frequencies 200 to 400 Hz. For intermediate frequencies 400 to 550 Hz the arrangement of Figure 18 is used.

In this arrangement continuous oscillation is allowed for each half cycle of the 50 Hz pattern control signal V' except that a full cycle gap follows each transition of V'. In this arrangement the resonant frequency of the LC combination is close to the control frequency.

For the higher frequencies, 550 Hz and above, the arrangement of Figure 19 is used.

This arrangement is similar to the first arrangement (ie that used for low frequencies) except that the gap here lasts for a full cycle of the oscillation current and the resonant frequency of the LC combination is close to the control frequency.

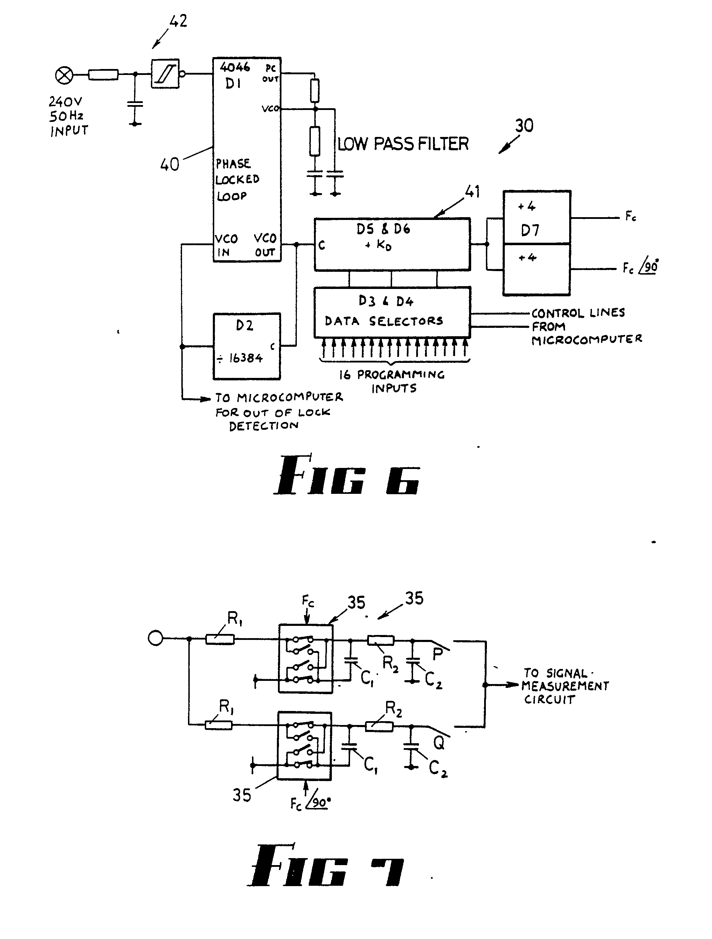

The control frequencies for firing the thyristors are always derived from the 50 Hz supply and hence are always locked to it. These frequencies are obtained by first multiplying the 50 Hz by an integer in a phase locked loop circuit 30 (Figure 6) and then dividing by a different integer. In the system herein described a fixed multiplier of 4096 is used and the different frequencies are then formed by dividing by a factor $K_D$. Hence the basic frequency equation is

$$Fc = \frac{50 \cdot 4096}{\cdot K_D} = \frac{204800}{K_D}$$

Eight frequencies are allocated to each sub-station and the same transmitter LC components can be used for each group of 8. Only the control frequency need alter.

As the source impedance of the power system (ie from the generators to the 11 kV bus 21) is almost entirely inductive, current $I_2$ in Figure 1, reflected from the oscillating load, will produce a voltage distortion on the 11 kV bus which is proportional to the rate of change of current

$$(\text{ie } V_D = L_s \frac{dI_2}{dt}).$$

Hence a voltage of the same frequency as the current will be produced on the 11 kV bus.

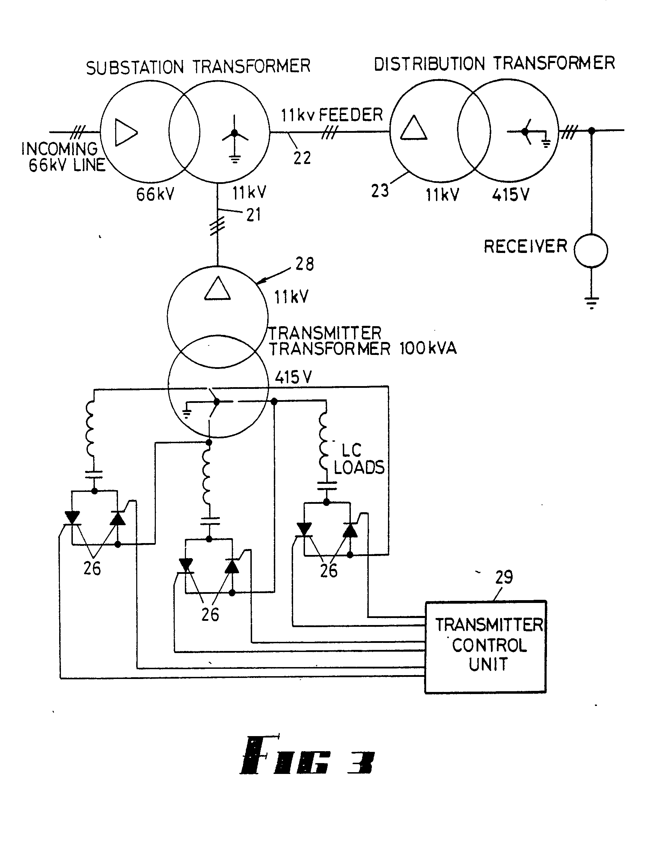

In a power system, this arrangement is implemented on a three phase basis, the current in each phase being 120° apart at the signalling frequency. The system arrangement is shown in Figure 3.

The minimum magnitude of signal voltage required is 0.16% of system voltage with the receivers set at a threshold level of 0.08%.

A CODE consists of either 2 or 3 bits, each bit consisting of the transmission of a frequency for a set period of time. A CODE consists of a START bit and either one or two CODE bits. The duration of each bit is critical. There are 5 different lengths of START bit each defining a different group of functions. There is only 1 length of CODE bit. The received duration of all bits must be between specified limits.

The spacing between the START bit and the first CODE bit is also used to define different functions. Four different spacings are used.

Hence the basic code is as follows:

| Start Bit | | Code Bits | |
|---|---|---|---|
| $f_1$ | | $f_2$ | $f_3$ |
| $P_1$ | $P_2$ | $P_3$ | $P_3$ |

Addresses are formed by defining frequencies $f_1$, $f_2$ and $f_3$ of the code.

Functions are formed by defining the periods $P_1$ and $P_2$.

By allocating 8 frequencies to each sub-station the following can be formed with the above code:

512 addresses

20 functions at each address.

The 20 functions are arranged as follows:

| Function No. | Start bit duration $P_1$—secs. | Spacing between Start & first Code bit $P_2$ secs | Number of Code bits | Number of addresses affected | Operate time secs. |
|---|---|---|---|---|---|
| 1 | 5 | 0 | 2 | 1 | 12.1 |
| 2 | 5 | 1.2 | 2 | 1 | 13.4 |
| 3 | 5 | 2 | 2 | 1 | 14.2 |
| 4 | 5 | 2.8 | 2 | 1 | 15.0 |
| 5 | 6.4 | 0 | 1 | 64 | 10.0 |
| 6 | 6.4 | 1.2 | 1 | 64 | 11.2 |
| 7 | 6.4 | 2 | 1 | 64 | 12.0 |
| 8 | 6.4 | 2.8 | 1 | 64 | 12.8 |
| 9 | 7.8 | 0 | 1 | 8 | 11.4 |
| 10 | 7.8 | 1.2 | 1 | 8 | 12.6 |
| 11 | 7.8 | 2 | 1 | 8 | 13.4 |
| 12 | 7.8 | 2.8 | 1 | 8 | 14.2 |
| 13 | 9.2 | 0 | 1 | 1 | 12.8 |
| 14 | 9.2 | 1.2 | 1 | 1 | 14.0 |
| 15 | 9.2 | 2 | 1 | 1 | 14.8 |
| 16 | 9.2 | 2.8 | 1 | 1 | 15.6 |
| 17 | 10.6 | 0 | 1 | 8 | 14.2 |
| 18 | 10.6 | 1.2 | 1 | 8 | 15.4 |
| 19 | 10.6 | 2 | 1 | 8 | 16.2 |
| 20 | 10.6 | 2.8 | 1 | 8 | 17.0 |

All bits are terminated by reversing the phase of the transmitted signal for 0.6 secs. For example the first START bit listed above consists of

| $f_1$ | $f_1\angle 180$ |
|---|---|
| 4.4s | 0.6s |

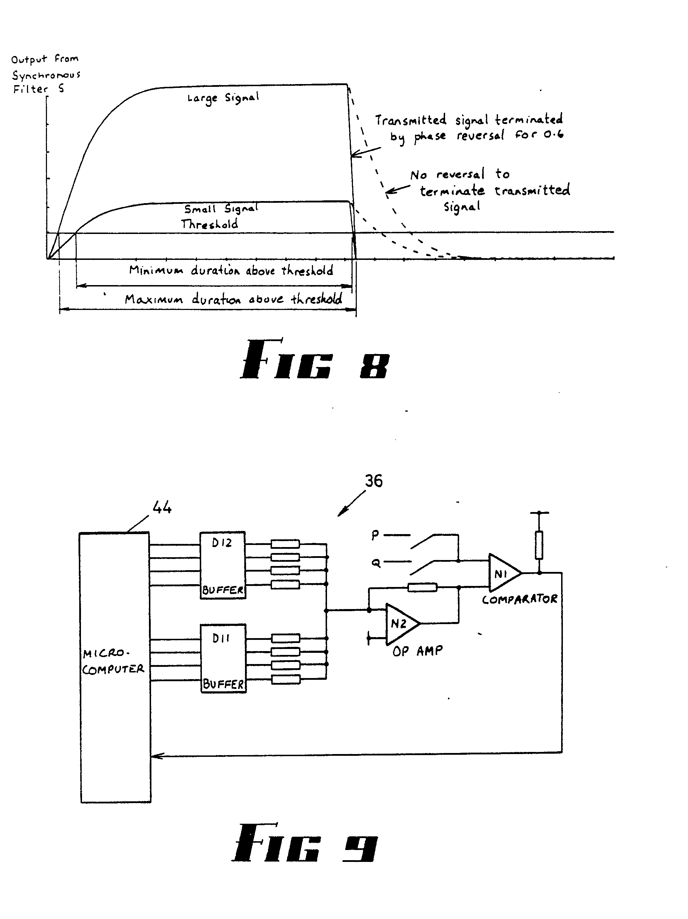

This helps to precisely define the duration of each bit, by producing the sharp cut-off shown in Figure 8, which compares the otherwise long decay time, shown in dotted lines.

The total duration of each CODE bit is 3.6 secs ie 3.0 secs followed by 0.6 secs with phase reversed.

The basic formula for determining frequency is

$$Fc = \frac{204800}{K_D}$$

where $K_D$ is an integer.

Frequencies above 200 Hz have been formed into GROUPS each GROUP consisting of 8 frequencies formed by 8 adjacent values of $K_D$. The frequencies closer than ±10 Hz of odd and ±5 Hz of even harmonics of 50 Hz are avoided as they occur naturally on the power system. A binary divider is used in the receivers for $K_D$ and the boundaries of each GROUP are determined when the 3 least significant bits of $K_D$ are 000 and 111.

A 10 bit programmable divider is used for $K_D$ and controlled as follows:

| $b_9$ | $b_8$ | $b_7$ | $b_6$ | $b_5$ | $b_4$ | $b_3$ | $b_2$ | $b_1$ | $b_0$ | Frequency |
|---|---|---|---|---|---|---|---|---|---|---|
| $X_9$ | $X_8$ | $X_7$ | $X_6$ | $X_5$ | $X_4$ | $X_3$ | $X_2$ | $X_1$ | $X_0$ | $f_1$ |
| | as above | | | | | | $Y_2$ | $Y_1$ | $Y_0$ | $f_2$ |
| | as above | | | | | | $Z_2$ | $Z_1$ | $Z_0$ | $f_3$ |

X, Y & Z are manually programmed into each receiver to set its address code.

The selection of which GROUP of frequencies to use for any one sub-station will be determined by the power system characteristics. The main parameter which will affect selection will be the existence of 11 kV capacitor banks on the system, either as a large bank mounted in a sub-station, or smaller banks installed out along feeders. The existence of these banks will make it more economical to use the lower frequencies whereas if capacitor banks are not present, the higher frequencies will result in smaller transmitter components. Capacitor banks installed on the higher system voltage, ie 66 kV, will have negligible effect on signal generation. Since capacitor banks are not part of the invention, they are not illustrated herein.

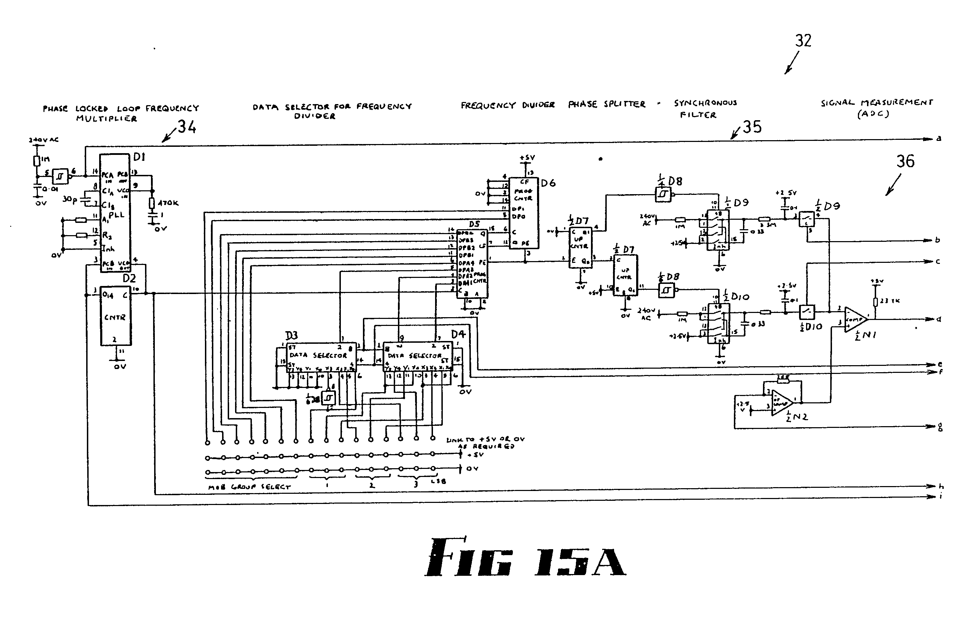

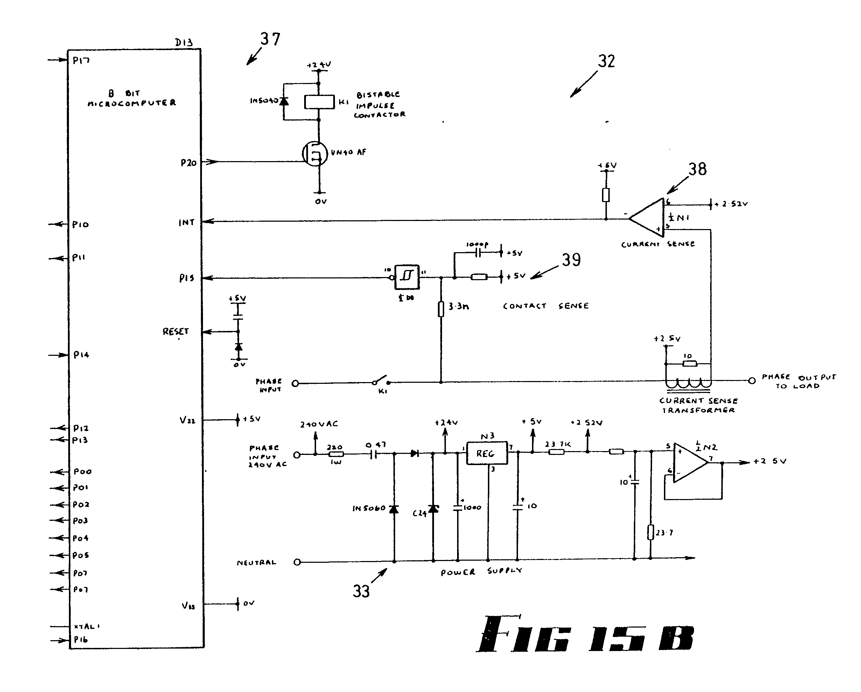

The receiver 32 (Figure 15) may be divided into 8 separate functional blocks as follows:

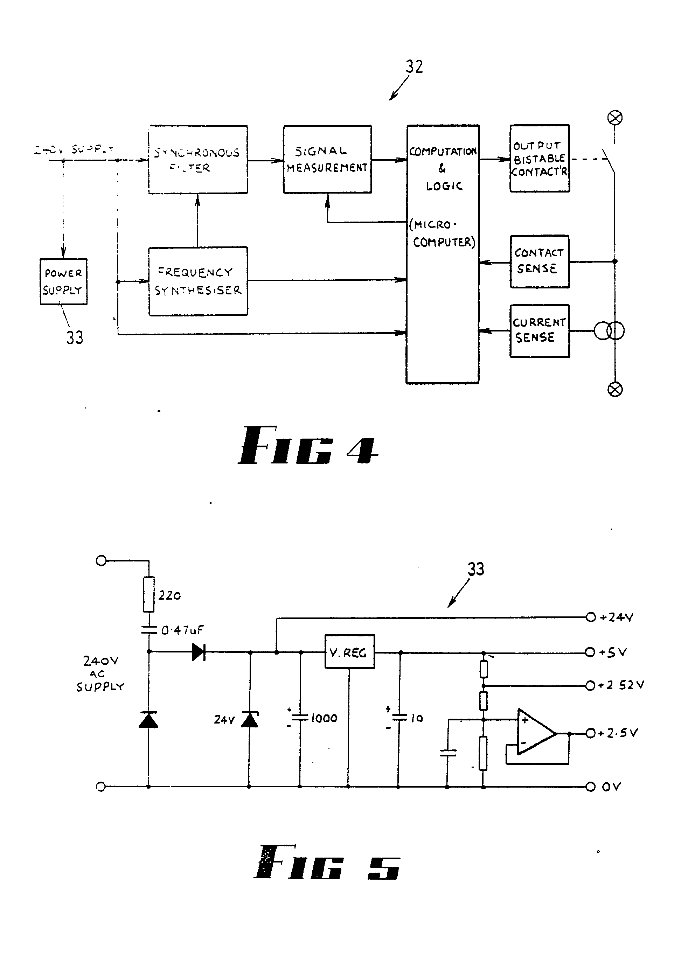

1. Power supply 33 (Figures 4, 5 and 15).
2. Frequency synthesiser 34 (Figure 15).
3. Synchronous filter 35 (Figures 7 and 15).
4. Signal measurement 36 (Figures 9 and 15).
5. Computation and logic 37 (Figure 15).
6. Current sense 38 (Figure 15).
7. Contact sense 39 (Figure 15).
8. Output bi-stable contactor 43 (Figure 13).

By using CMOS integrated circuits throughout, the power supply only needs to provide a few milliamps. It can therefore be made very simple by using a capacitive divider, rectifier and regulator direct from the 240V AC supply (see Figure 5).

The frequency synthesiser section is built up using a standard phase locked loop multiplier 40 followed by a programmable divider 41 to form the required filter frequency.

The 50 Hz is multiplied by 16384 and then divided by an integer $K_D$ which is manually programmed in. This results in a frequency four times the desired filter frequency and is subsequently divided to produce two control signals at the desired frequency but in quadrature (ie one displaced 90° from the other). The selection of frequency $Fc_1$, $Fc_2$ or $Fc_3$ is controlled by the data selectors D3 and D4 (Figure 6).

A single stage RC filter and Schmitt trigger circuit 42 are used to condition the 50 Hz input signal from the supply to the phase locked loop (Figure 6).

The low pass filter from the phase comparator output on the phase locked loop to the voltage controlled oscillator (VCO) input needs to have a fairly long time constant for stability. For the same reason the VCO range selection resistors need to confine the VCO frequency to about ±10% of centre frequency.

The synchronous filters 35 (or correlators) form the heart of the receiver circuit. These circuits extract the signal frequency from the 50 Hz supply and do so in a very selective manner.

Each synchronous filter consists of a pair of solid state change-over switches in the middle of an RC filter (R1 C2), followed by a second stage of RC filtering (R2 C2) for smoothing, as shown in Figure 7.

If the frequency driving the switches is the same as the transmitted frequency and both are in phase then the switches will act as a synchronous rectifier and the rectified signal voltage will appear as a DC voltage on capacitor C2. When the signal frequency is 90° out of phase with the correlator frequency, zero signal voltage will appear on C2. If the correlator frequency is very slightly different from the transmitted frequency then, in effect, their phase relationship will change through 360° at a rate equal to the difference frequency, with the result that the voltage appearing on capacitor C2, will be low frequency AC. By using two synchronous filters driven by control frequencies which are in quadrature (90° apart) and taking the square root of the sum of their squares, a non-phase sensitive detector is formed, ie

$$S=\sqrt{P^2+Q^2}$$

where S=total signal, P and Q are outputs from each synchronous filter.

By time checking the zero crossing of each correlator output (ie P & Q) separately, a limit can be set on the low frequency AC output referred to above. In this way the filter characteristic can be made extremely narrow and complete rejection of all frequencies outside the pass band can be obtained (Figure 11). For example, with a time check of 2.4 seconds, complete rejection of all frequencies outside of ±0.2 Hz of the centre frequency is obtained.

As the 240 V 50 Hz voltage is very much larger than the signal voltage it will appear on capacitor $C_1$ as a ripple voltage. A second stage of RC filtering (R2 C2) is used to eliminate this ripple.

The total synchronous filter circuit, as shown in Figure 7, gives ground referenced outputs at P & Q which are then sampled into the measurement circuit.

Due to the RC time constants of the synchronous filters, outputs P and Q will have slow rise and fall times. By reversing the phase (ie 180° phase change) of the transmitted signal for the last 0.6 secs of each bit the fall times of P and Q can be made much shorter and the signal duration above threshold then becomes almost independent of signal magnitude. This minimises transmission time and allows but duration to convey information. This is referred to above and illustrated in Figure 8.

The signals P and Q from each of the synchronous filters are measured alternately each second cycle of the 50 Hz, ie every 40 ms. A digital to analogue converter circuit is used controlled by a successive approximation routine in a microcomputer. Figure 9 shows the circuit used.

All the computation and logic for the receiver is carried out in the microcomputer 44. (Microcomputer 44 is a Philips PCD3343, available from Philips, Eindhoven, Holland).

As mentioned above the microcomputer 44 takes a digital measurement of each of the two synchronous filter outputs. The total signal S is then computed from $S=\sqrt{P^2+Q^2}$. In addition, when S is below threshold long running averages, using 256 samples, are also computed of P and Q and these values then used for zero correction. For most of the time no signal is present and hence if the signal is averaged with a long time constant it represents the residual signal.

Such a residual can be present due to cross talk and leakage current in the switches, bias current in the comparator and offset voltages in the comparator and operational amplifier. If the averaging time constant is made very long compared to signal duration the running average will not change appreciably during the receipt of a signal. The residual measurements for P and Q are then subtracted from P & Q to give corrected readings.

The signal is tested for magnitude and the time it is above a set threshold is measured. The CODE bits have the shortest duration and they require that the signal is above threshold for at least 2.4 seconds but not more than 3.8 seconds. START bits with five different durations are used and they have the following limits.

| Start bit | Min. duration secs. |
|---|---|
| 1 | 3.8 |
| 2 | 5.2 |
| 3 | 6.6 |
| 4 | 8.0 |
| 5 | 9.4 |

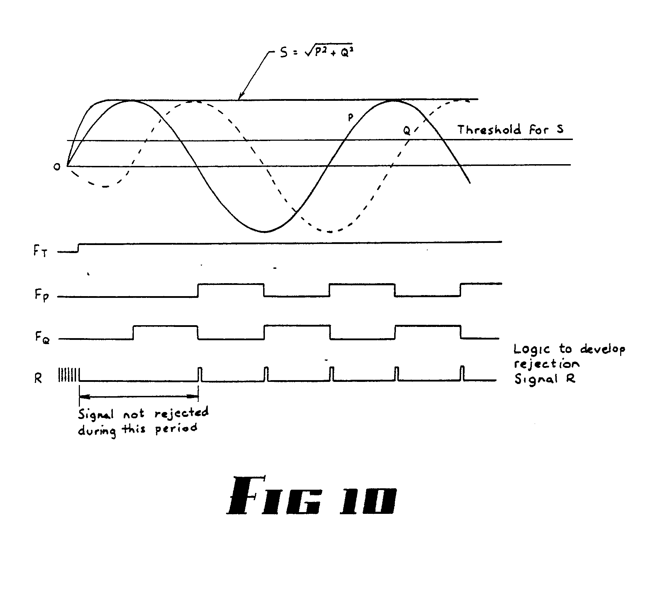

The improved frequency discrimination is achieved by checking the frequency of each of the correlator outputs, ie P & Q. As explained before if the incoming signal frequency is slightly different from the synchronous filter frequency, then P and Q outputs will be at the difference frequency. This frequency can be checked by using the P and Q zero crossings to logically develop a rejection signal R as shown in Figure 10. This logic is performed by a routine in the microcomputer and uses three flags, FT the threshold flag, FP the P flag and FQ the Q flag. If total signal S is below threshold all three flags are reset and rejection signal R is pulsed high. When S is above threshold flags FP and FQ are set respectively whenever P or Q perform a zero crossing. If when FP is set FQ is already set then R is pulsed high and FQ is reset. Similar conditions apply if FP is already set when FQ is set. The pulsed signals R are used to reset a signal check timer thus rejecting the signal. Therefore in order for a signal to be accepted the time between reset pulses must be longer than the required bit time. For a CODE bit the maximum check time is 3.8 seconds which corresponds to a period for P and Q of 2×3.3=7.6 secs which represents a frequency of 0.132 Hz. That is if the incoming signal is further removed than ±0.132 Hz from the synchronous filter frequency it will be rejected. Similarly for the longest START bit the maximum check time is 10.8 seconds and in this case if the incoming signal is further removed than ±0.046 Hz from the synchronous filter frequency it will be rejected.

The above frequency checks on P and Q result in the filter characteristic shown in Figure 11. In Figure 11, the broad band pass width of prior art is graphically depicted. This was greatly narrowed in our earlier development the subject of Australian Patent 531592, and is further narrowed in this invention as shown in Figure 11.

As each bit is received the microcomputer decides whether it is a START or a CODE bit according to its duration. All decoding of the signal is done by the microcomputer 44.

The 50 Hz going in to the phase locked loop from the 16384 divider is compared in phase with the 50 Hz supply input. If the phase difference is greater than 300 µs the loop is considered to be OUT OF LOCK. Whenever an out of lock occurs the timers measuring signal duration are reset.

When a receiver is used to control a storage hot water system, it is an advantage from a power system point of view to allow only one heating period during any prescribed ON time. For instance if an ON time is allowed between 10 pm and 7 am, then most heaters will attain full temperature say by 5 am and their thermostats will open. If a household then uses hot water at say 6 am, the thermostat will close and a second heating period will commence. This second heating period places load on the power system at a time when other loads are heavy (industry just starting up) and should therefore be avoided. The prescribed ON time cannot be made shorter because a small number of consumers will require the full time of their storage system to reach full temperature.

To prevent the second heating period a lockout routine is included which senses the condition that no load current is flowing when the contactor is closed (hence the thermostat must be open). Under these conditions the microcomputer operates the contactor to the OFF position. The contact sense and current sense circuits are described later.

An over-ride timer routine is included to provide a fail-safe feature in the event of loss of communication with a sub-station. This can occur due to temporary feeder changes or a transmitter failure. This timer causes the output contactor to close 6.2 hours after the receipt of the last OFF command. If the contactor is required to remain off, a signal must be transmitted before the 6.2 hours expires in order to reset the timer. The only signal required to reset the timer is a START bit.

A software routine is included in the microcomputer 44 which enables the switch ON of low usage consumers to be delayed. By timing each day the duration the water heater is energized and averaging this over a week a consumer's usage can be assessed. After an ON signal is sent, actual switch on can then be delayed in inverse proportion to normal usage. All these functions are embodied in the microcomputer software, the program of which forms no part of this invention. This allows the load of low usage consumers to be transferred to the early hours of the morning where there is a "trough" in the daily load curve.

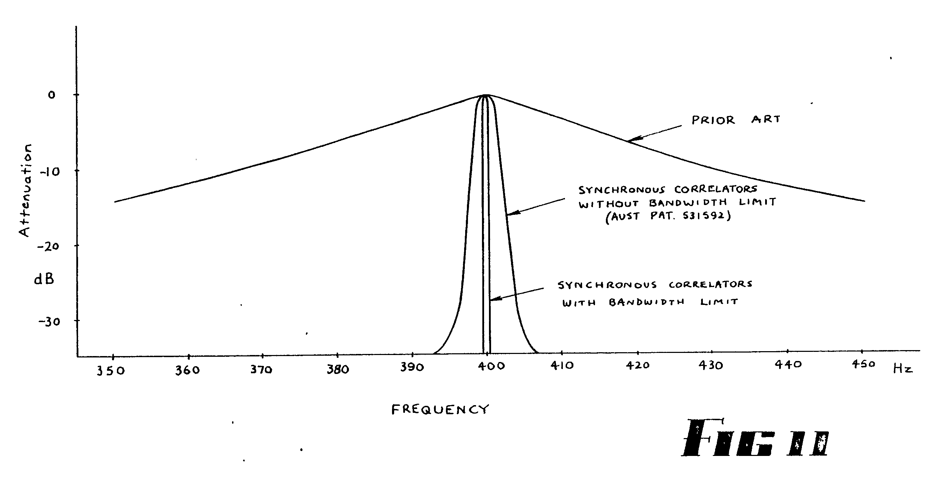

Current flow in the load circuit is sensed by means of a small current transformer as shown in Figure 12.

When load current flows output I goes high on a 50 Hz basis. For no load current, I is low. The transition of I to the high state initiates an interrupt routine in the microcomputer. Current sense is used in the "lockout" and "delay" routines.

The position (open or closed) of the output contactor 43 is sensed with the circuit shown in Figure 13.

When the contact is open output C is low. When the contact is closed C goes high on a 50 Hz basis which is sensed by the microcomputer. Contact sense is used in the "decoding" and "lockout" routines.

The output contactor needs to be mechanically bi-stable and of the impulse type. That is, it should have only one coil which is energised for a short time (approximately 40 ms) to change the state of the contact. The relay should be as efficient as possible to minimise the power required to drive it. A single make contact is required having a current rating of at least 30 amperes AC resistive.

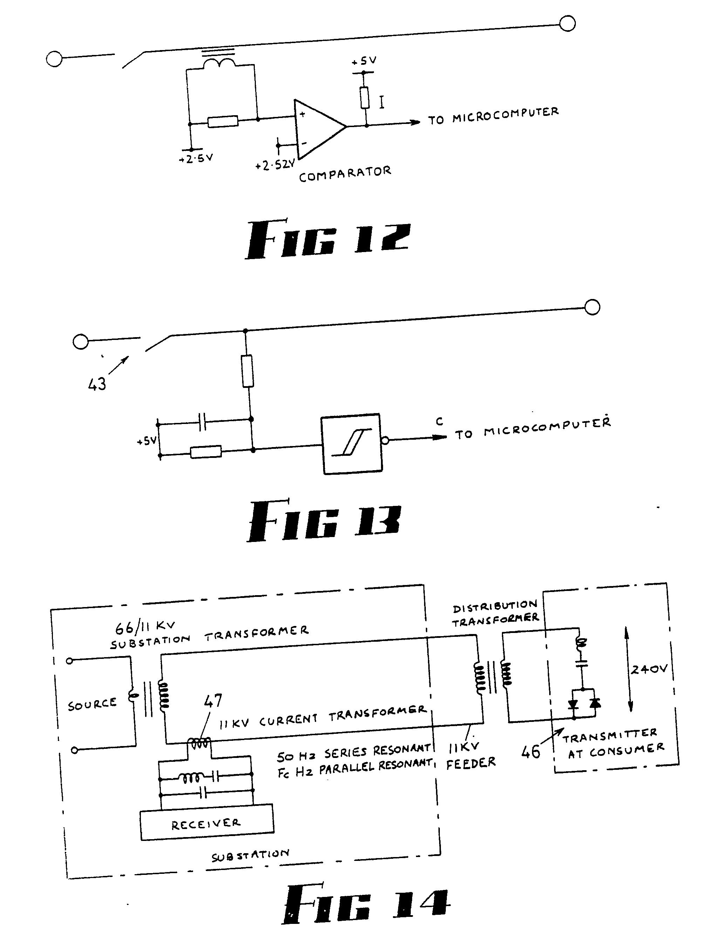

The same principles outlined so far, and method of coding can be used for signalling from a consumer back to a sub-station. This is referred to as upstream signalling. There is one important difference, however, between upstream and downstream signalling. Whereas downstream is a voltage scheme, upstream uses current. In downstream signalling a signal voltage of a very precise frequency is superimposed on the normal system voltage and this is detected by a synchronous filter in the receiver. In upstream signalling a very small transmitter 46, but still of the same configuration as described above, is located at the consumer. The transmitter current is at a very precise frequency and may be detected at the sub-station by first turning it into a voltage with current transformer 47 and then using the synchronous filter to detect it. The basic arrangement is shown in Figure 14.

As before, a multi-frequency scheme can be used for coding. However if variable data is required to be transmitted rather than control signals to specific addresses then a bank of fixed synchronous filters will be required, one for each frequency used. For example, if 10 frequencies are used to transmit decimal information, 10 synchronous filters will be required and each frequency will represent a decimal number. As many different frequencies are available for use, simultaneous transmissions are possible on the same feeder. Simultaneous transmissions using the same frequencies are also possible on different feeders as each feeder current is entirely separate.

It is quite important to note that the thyristor control is such that firing of the thyristors is in a pattern (Figures 18 and 19), the pattern frequency being the same as the power system frequency but phase shifted from it, such that for one-half the period of the pattern, the transmitter load current is continuous from the positive half cycle to the negative half cycle and for the other half period transmitter load current is continuous from the negative half cycle to the positive half cycle, the basic firing frequency being the signal frequency required and the resonant frequency of the inductance capacitance combination being about 20% (between 5% and 50%) higher than the signal frequency (for the lower frequencies) thus causing discontinuous oscillation because of the short periods of zero load current. For higher frequencies, the capacitance inductance combination has about the same resonant frequency as the signal frequency and the firing pattern of the thyristors is such that oscillation is continuous except for one complete period of the oscillation following each transition of the pattern frequency. For still higher frequencies the capacitance inductance combination has about the same resonant frequency as the signal frequency and oscillation is only allowed on every alternate cycle.

In all instances it will be noted that the downstream signals are voltage signals and the upstream signals are current signals, this being necessary because of the inherent impedances of a power supply network.

While the consumer receiver. and transmitter is separately described above, it will be recognised by those skilled in the art that a common frequency synthesiser and microcomputer combination can be used both for receiving and transmitting modes.

Reversals of phase in the transmitted signal which is referred to above is achieved merely by delaying the firing of the thyristors by 180°.

**Claims**

1. A ripple control system for an alternating current electric power distribution system which comprises a transmitter (20) for transmitting a code and a receiver (32) for receiving said code, said transmitter being coupled to the distribution system to superimpose a signal on the power frequency waveform as a sequence of waveform distortion, comprising

frequency control means (29) to accurately generate closely spaced frequencies in the transmitter to enable the use of multifrequency codes, an input detector circuit in said receiver having two synchronous filters (35) driven ninety degrees out of phase with each other, means (44) for squaring and summing the synchronous filter outputs to form a non-phase sensitive output, characterised in that discrimination means (44) are provided comprising frequency checking means for the checking of frequency of each synchronous filter output whereby frequency differences exceeding a set limit between the synchronous filter centre frequency and the incoming signal frequency are used to give complete rejection characteristics to the filter thus producing a very narrow bandwidth filter.

2. A ripple control system according to claim 1 further characterised in that said discrimination means comprises a microcomputer (44) programmed to logically examine the zero crossings of the two synchronous filter outputs to produce rejection of incoming signals when the period between said zero crossings is less than a fixed code bit time.

3. A ripple control system according to claim 1 or claim 2 further characterised by a transmitter transformer (28), said transmitter (20) being coupled by that transformer to the distribution system to derive power therefrom and generate signals by means of sequences of waveform distortions, the frequencies of said signals thereby being synthesised from and locked to the power frequency.

4. A ripple control system according to claim 3 further characterised in that said transmitter comprises an inductance (24) in series with a capacitance (25), a pair of thyristors (26) connected in inverse parallel and fired by a transmitter control unit (29) in a pattern, said transmitter transformer (28) coupling the signals generated by said firing to the power system.

5. A ripple control system according to claim 4 further characterised in that said inductance capacitance combination (24, 25) has a resonant frequency higher than said signal frequency and said transmitter control unit (29) is arranged to fire the thyristors at the signal frequency resulting in gaps of zero current following each half cycle of oscillation current.

6. A ripple control system according to claim 4 further characterised in that said inductance capacitance combination (24, 25) has a resonant frequency higher than said signal frequency and said transmitter control unit (29) is arranged to fire the thyristors at the signal frequency but additionally controlled such that when a logic signal of mains frequency, but phase shifted from the mains, is logic HIGH then oscillation current is continuous from the positive half cycle to the negative half cycle with a gap of zero current following the negative half cycle, and when such logic signal is LOW oscillation current is continuous from the negative half cycle to the positive half cycle with a gap of zero current following the negative half cycle.

7. A ripple control system according to claim 4 wherein said inductance capacitance combination (24, 25) has a resonant frequency near said signal frequency and said transmitter control unit (29) is arranged to fire the thyristors at the signal frequency, but said control unit additionally controls firing of the thyristors (26), such that when a logic signal of mains frequency, but phase shifted from the mains, is logic HIGH then oscillation current is continuous until the logic signal changes to LOW whereupon following the first positive half cycle of oscillation current a gap of zero current ensues for one full signal frequency period, and when said logic signal changes from LOW to HIGH then following the first negative half cycle a gap of zero current ensues for one full signal frequency period.

8. A ripple control system according to claim 4 further characterised in that said inductance capacitance combination (24, 25) has a resonant frequency near said signal frequency and said transmitter control unit (29) fires the thyristors (26) basically at the signal frequency but additionally controls firing of the thyristors, such that when a logic signal of mains frequency, but phase shifted from the mains, is logic HIGH then oscillation current is continuous from the positive half cycle to the negative half cycle with a gap of zero current for one full signal period following the negative half cycle and when the logic signal is LOW oscillation current is continuous from the negative half cycle to the positive half cycle with a gap of zero current for one full signal period following the positive half cycle, with an extra oscillation half cycle immediately following each logic transition.

9. A ripple control system according to any preceding claim further characterised in that said code comprises a START bit consisting of a signal frequency being transmitted for a set period of time followed by a set period of no transmission followed by the transmission of at least one code CODE bit comprising the transmission of a second frequency for a set period of time.

10. A ripple control system according to claim 7 further characterised in that said code is identified by the START bit duration and frequency, period between START bit and the first CODE bit, and each CODE bit duration and frequency.

11. A ripple control system according to either claim 7 or claim 8 further characterised by phase reversal means (29) by which each said bit is terminated by reversing the phase of the transmitted signal for sufficient time to achieve a sharp cut-off in the received signal.

12. A ripple control system according to any one of the preceding claims further characterised in that said frequency control means to control the synchronous filters in the receivers and the thyristor firing in the transmitter control unit is synthesised from the power mains frequency of the electric distribution system firstly by fixed frequency multiplication using a phase locked loop frequency multiplier circuit (40) followed by a variable divider (41) to produce a plurality of control frequencies.

13. A ripple control system according to any one of the preceding claims further characterised in that said transmitter (20) is at the power supply end of said distribution system and the signal transmitted is transmitted by said distribution system to a consumer as a voltage signal.

14. A ripple control system according to any one of claims 1 to 12 further characterised in that said transmitter is at a consumer end of said distribution system and the signal transmitted is transmitted by said distribution system to the power supply end thereof as a current signal.

15. A ripple control system according to claim 14 further characterised by a current transformer (47) at said power supply end transforming said current signal to a voltage signal which is directed into said receiver.

16. A method of transmitting and receiving a ripple control system signal characterised in that it includes discriminating the transmitted signal at the receiver end by the discrimination means (44) claimed in any one of the preceding claims.

**Patentansprüche**

1. Rundsteueranlage für ein Wechselstromenergie-Verteilungssystem die einen Sender (20) zum Senden eines Codes und einen Empfänger (32) zum Empfangen des Codes aufweist, wobei der Sender mit dem Energieverteilungssystem gekoppelt ist, um den Schwingungen der Netzfrequenz ein Signal als Folge von Schwingungsverzerrungen zu überlagern, mit:

einer Frequenzregeleinrichtung (29) zum genauen Erzeugen dicht aufeinanderfolgender Frequenzen im Sender und den Gebrauch von Mehrfrequenz-Codes zu ermöglichen;

einem Eingangsdetektor-Schaltkreis im Empfänger in dem zwei 90° zueinander phasenverschobene synchrone Filter (35) enthalten sind;

eine Einrichtung (44) zum Quadrieren und Summieren der synchronen Filterausgänge um einen phasenunabhängigen Ausgang zu erhalten;

dadurch gekennzeichnet, daß:

Unterscheidungseinrichtungen (44) vorgesehen sind, welche aufweisen:

eine Frequenz-Kontrolleinrichtung zur Kontrolle der Frequenzen jedes synchronen Filterausgangs wobei die Überschreitung einer vorgegebenen Grenze durch Frequenzdifferenzen zwischen der Mittenfrequenz des Filters und der Eingangssignalfrequenz verwendet wird, um dem Filter eine komplette Sperrcharakteristik mit sehr schmaler Bandbreite zu verleihen.

2. Rundsteueranlage nach Anspruch 1, weiter dadurch gekennzeichnet, daß die Unterscheidungseinrichtungen einen Mikrocomputer (44) aufweisen, der so programmiert ist, daß die Nulldurchgänge der zwei synchronen Filterausgänge logisch geprüft werden um eine Unterdrückung des Eingangssignals zu erreichen, wenn die Zeit zwischen den Nulldurchgängen kleiner als eine fest vorgegebene binär codierte Zeit ist.

3. Rundsteueranlage nach Anspruch 1 oder 2, weiter gekennzeichnet durch einen Sender-Transformator (28), wobei der Sender (20) über den Transformator mit dem Energieverteilungssystem gekoppelt ist, um davon Energie zu erhalten und Signale in Form von Folgen von Schwingungsverzerrungen zu erzeugen, wobei die Frequenzen dieser Signale hierbei aus der Netzfrequenz zusammengesetzt und fest zu dieser sind.

4. Rundsteueranlage nach Anspruch 3, weiter dadurch gekennzeichnet, daß der Sender eine Induktivität (24) in Reihe mit einer Kapazität (25) und einem invers-parallel geschalteten Thyristorpaar (26), das von einer Sender-Steuereinheit (29) nach einem Muster gezündet wird aufweist, wobei die durch die Zündung erzeugten Signale über den Sender-Transformator (28) mit dem Energieversorgungsnetz gekoppelt sind.

5. Rundsteueranlage nach Anspruch 4 weiter dadurch gekennzeichnet, daß die Induktivität-Kapazitäts-Kombination (24, 25) eine höhere Resonanzfrequenz hat als die Signalfrequenz und die Sender-Steuereinheit (29) die angeordnet ist, um die Thyristoren mit der Signalfrequenz zu zünden, die man aus den Lücken nach jeder halben Periode der Stromschwingung erhält, in denen der Strom Null ist.

6. Rundsteueranlage nach Anspruch 4 weiter dadurch gekennzeichnet, daß die Induktivitäts-Kapazitäts-Kombination (24, 25) eine höhere Resonanzfrequenz hat als die Signalfrequenz und die Sender-Steuereinheit (29) angeordnet ist um die Thyristoren mit der Signalfrequenz zu zünden aber zusätzlich so gesteuert ist, daß wenn ein Logik-Signal der Netzfrequenz, welches zur Netzfrequenz phasenverschoben ist, logisch HIGH ist, die Stromschwingung ununterbrochen von der positiven Halbperiode zur negativen Halbperiode mit einer Lücke in der der Strom Null ist nach jeder negativen Halbperiode erfolgt und wenn das Logik-Signal LOW ist, die Stromschwingung ununterbrochen von der negativen Halbperiode zur positiven Halbperiode mit einer Lücke in der der Strom Null ist nach jeder positiven Halbperiode erfolgt.

7. Rundsteueranlage nach Anspruch 4 worin die Induktivitäts-Kapazitäts-Kombination (24, 25) eine Resonanzfrequenz hat, die nahe der Signalfrequenz ist, und die Sender-Steuereinheit (29) angeordnet ist, um die Thyristoren mit der Signalfrequenz zu zünden, aber die Steuereinheit zusätzlich die Zündung der Thyristoren (26) derart steuert, daß wenn ein Logik-Signal der Netzfrequenz, welches zur Netzfrequenz phasenverschoben ist, logisch HIGH ist, die Stromschwingung ununterbrochen erfolgt bis das Logik-Signal nach LOW wechselt, worauf der ersten positiven Halbperiode der Stromschwingung eine Lücke über eine volle Signalfrequenz-Periode in der der Strom Null ist folgt und wenn das Logik-Signal von LOW nach HIGH wechselt, der ersten negativen Halbperiode eine Lücke über eine volle Signalfrequenz-Periode folgt, in der der Strom Null ist.

8. Rundsteueranlage nach Anspruch 4 weiter dadurch gekennzeichnet, daß die Induktivitäts-Kapazitäts-Kombination (24, 25) eine Resonanzfrequenz hat, die nahe der Signalfrequenz ist und die Sender-Steuereinheit (29) die Thyristoren (26) im wesentlichen mit der Signalfrequenz zündet, aber zusätzlich das Zünden der Thyristoren derart steuert, daß wenn ein Logiksignal der Netzfrequenz, welches phasenverschoben zur Netzfrequenz ist, logisch HIGH ist, die Stromschwingung ununterbrochen von der positiviten Halbperiode zur negativen Halbperiode mit einer Lücke in der der Strom Null ist über eine volle Signal-Periode die der negativen Halbperiode folgt erfolgt und wenn das Logik-Signal LOW ist, die Stromschwingung ununterbrochen von der negativen Halbperiode zur positiven Halbperiode mit einer Lücke in der der Strom Null ist über eine volle Signal-Periode die der positiven Halbperiode folgt erfolgt, wobei eine zusätzliche halbe Schwingungsperiode jedem logischen Übergang direkt folgt.

9. Rundsteueranlage nach einem der vorhergehenden Ansprüche weiter dadurch gekennzeichnet, daß der Code ein START-Bit aufweist, das aus einer Signalfrequenz besteht, die für eine feste Zeitdauer übertragen wird, gefolgt von einer festen Zeitdauer ohne Übertragung, gefolgt von einer Übertragung von wenigstens eines CODE-Bits, das die Übertragung einer zweiten Frequenz für eine feste Zeitdauer aufweist.

10. Rundsteueranlage nach Anspruch 7 weiter dadurch gekennzeichnet, daß der Code identifiziert wird durch die START-Bit-Dauer und -Frequenz, durch die Dauer zwischen START-Bit und dem ersten CODE-Bit und durch die Dauer und Frequenz jedes CODE-Bits.

11. Rundsteueranlage nach Anspruch 7 oder 8 weiter gekennzeichnet durch Phasen-Umkehr-Einrichtungen (29) mit denen jedes Bit durch eine ausreichend lange Umkehrung der Phase des übertragenen Signals begrenzt wird um eine scharfe Abschaltung im empfangenen Signal zu erreichen.

12. Rundsteueranlage nach einem der vorhergehenden Ansprüche, weiter dadurch gekennzeichnet, daß die Frequenzsteuereinrichtung zum Steuern der synchronen Filter im Empfänger und die Thyristorzündung in der Sender-Steuereinheit aus der Netzfrequenz des Energieverteilungssystems zunächst durch eine festgelegte Frequenz-Multiplikation mittels eines phaselocked-loop Frequenz-Multiplizierer-Schaltkreis (40) gewonnen wird, gefolgt von einem variablen Dividierer (41) zur Erzeugung einer Mehrzahl von Steuerfrequenzen.

13. Rundsteueranlage nach einem der vorhergehenden Ansprüche, weiter dadurch gekennzeichnet, daß der Sender (20) am Stromversorgungsende des Energieverteilungssystems angeordnet ist und daß das übertragene Signal von dem Energieübertragungssystem einem Verbraucher als ein Spannungssignal übertragen wird.

14. Rundsteueranlage nach einem der Ansprüche 1 bis 12 weiter dadurch gekennzeichnet, daß der Sender am Verbraucherende des Energieverteilungssystems angeordnet ist und daß das übertragene Signal von dem Energieverteilungssystem zu dessen Stromversorgungsende als Stromsignal übertragen wird.

15. Rundsteueranlage nach Anspruch 14 weiter gekennzeichnet durch einen Strom-Transformator (47) am Stromversorgungsende der das Stromsignal in ein Spannungssignal transformiert das dann in den Empfänger geleitet wird.

16. Verfahren zum Senden und Empfangen eines Rundsteueranlagensignals, dadurch gekennzeichnet, daß das gesendete Signal am Empfängerende mittels der Unterscheidungseinrichtung (44) gemäß einem der vorhergehenden Ansprüche diskriminiert wird.

**Revendications**

1. Système de commande à superposition de fréquence pour un système de distribution de puissance électrique à courant alternatif qui comprend un transmetteur (20) pour transmettre un code et un récepteur (32) pour recevoir ledit code, ledit transmetteur étant couplé au système de distribution pour superposer un signal sur l'onde de fréquence de puissance sous forme d'une suite de distorsions d'onde, comprenant des moyens de commande de fréquence (29) pour engendrer avec précision des fréquences étroitement espacées dans le transmetteur pour permettre l'utilisation de codes multifréquences, un circuit détecteur d'entrée dans ledit récepteur ayant deux filtres synchrones (35) entraînés avec un déphasage de 90° l'un par rapport à l'autre, des moyens (44) pour élever au carré et additionner les sorties des filtres synchrones pour délivrer une sortie indépendante de la phase, caractérisé en ce que des moyens de discrimination (44) sont prévus comprenant des moyens de vérification de la fréquence pour la vérification de la fréquence de chaque sortie des filtres synchrones, les différences de fréquence, dépassant un seuil, entre la fréquence centrale des filtres synchrones et la fréquence du signal qui arrive, étant utilisées, pour fournir des caractéristiques de rejet total aux filtres en produisant ainsi un filtre à largeur de bande très étroite.

2. Système de commande selon la revendication 1, caractérisé de plus en ce que lesdits moyens de discrimination comprennent un micro-calculateur (44) programmé pour contrôler logiquement les croisements de zéros des deux sorties des filtres synchrones pour produire le rejet des signaux qui arrivent quand la période entre lesdits croisements de zéros est inférieure à une durée fixe codée numériquement.

3. Système de commande selon la revendication 1 ou la revendication 2, caractérisé de plus par un transformateur (28) du transmetteur, ledit transmetteur (20) étant couplé par ce transformateur au système de distribution pour en dériver de la puissance et engendrer des signaux au moyen de suites de distorsions d'onde, les fréquences desdits signaux étant ainsi synthétisées à partir de la fréquence de puissance et bloquées à celle-ci.

4. Système de commande selon la revendication 3, caractérisé de plus en ce que ledit transmetteur comprend une inductance (24) montée en série avec une capacité (25), une paire de thyristors (26) reliés tête-bêche et excités par une unité de commande du transmetteur (29), ledit transformateur (28) couplant les signaux engendrés par ladite excitation au système de puissance.

5. Système de commande selon la revendication 4, caractérisé de plus en ce que ladite combinaison inductance-capacité (24, 25) a une fréquence de résonance plus élevée que la fréquence dudit signal, et en ce que l'unité de commande du transmetteur (29) est agencée pour exciter les thyristors à la fréquence du signal, en créant des espaces de courant nul qui suivant chaque demi-cycle du courant d'oscillation.

6. Système de commande selon la revendication 4, caractérisé de plus en ce que la combinaison inductance-capacité (24, 25) a une fréquence de résonance plus élevée que ladite fréquence du signal, et en ce que ladite unité de commande du transmetteur (29) est agencée pour exciter les thyristors à la fréquence du signal, mais de plus est commandée de sorte que, quand un signal logique de la fréquence du secteur, mais déphasé par rapport au secteur, est au niveau logique HAUT, alors de courant d'oscillation est continu depuis le demi-cycle positif jusqu'au demi-cycle négatif avec un espace de courant nul qui suit le demi-cycle négatif, et quand un tel signal logique est au niveau BAS, le courant d'oscillation est continu depuis le demi-cycle négatif jusqu'au demi-cycle positif avec un espace de courant nul qui suit le demi-cycle négatif.

7. Système de commande selon la revendication 4 dans lequel ladite combinaison inductance-capacité (24, 25) a une fréquence de résonance proche de ladite fréquence du signal, et en ce que l'unité de commande du transmetteur (29) est agencé pour exciter les thyristors à la fréquence du signal, mais ladite unité de commande commande de plus l'excitation des thyristors (26), de sorte que, quand un signal logique de la fréquence du secteur, mais déphasé par rapport au secteur, est au niveau logique HAUT, alors le courant d'oscillation est continu jusqu'à ce que le signal logique passe au niveau BAS, après quoi un espace de courant nul, qui suit le premier demi-cycle positif du courant d'oscillation, s'ensuit pendant une période de fréquence du signal complète, et quand ledit signal logique passe du niveau BAS au niveau HAUT, alors un espace de courant nul, qui suit le premier demi-cycle négatif, s'ensuit pour une période de fréquence de signal pleine.

8. Système de commande selon la revendication 4, caractérisé de plus en ce que la combinaison inductance-capacité (24, 25) a une fréquence de résonance proche de ladite fréquence du signal, et en ce que l'unité de commande du transmetteur (29) excite les thyristors (26) essentiellement à la fréquence du signal, mais de plus commande l'excitation des thyristors, de sorte que, quand un signal logique de la fréquence du secteur, mais déphasé par rapport au secteur, est au niveau logique HAUT, alors le courant d'oscillation est continu depuis le demi-cycle positif jusqu'au demi-cycle négatif avec un espace de courant nul pour une période de signal pleine qui suit le demi-cycle négatif, et quand le signal logique est au niveau BAS, le courant d'oscillation est continu depuis le demi-cycle négatif jusqu'au demi-cycle positif avec un espace de courant nul pour une période de signal pleine qui suit le demi-cycle positif, avec un demi-cycle d'oscillation supplémentaire qui suit immédiatement chaque transition logique.

9. Système de commande selon l'une quelconque des revendications précédentes, caractérisé de plus en ce que ledit code comprend une information codée START constituée d'un signal de fréquence transmis pendant une période donnée de temps suivie par une période donnée de non-transmission, suivie par la transmission d'au moins une information codée CODE comprenant la transmission d'une seconde fréquence pour une période donnée de temps.

10. Système de commande selon la revendication 7, caractérisé de plus en ce que ledit code est identifié par la durée et la fréquence de l'information codée START, par la période entre l'information codée START et la première information codée CODE, et par chaque fréquence et durée de l'information codée CODE.

11. Système de commande selon l'une ou l'autre des revendications 7 et 8, caractérisé de plus par des moyens d'inversion de phase (29) par lesquels chacune desdites informations codées est terminée en inversant la phase du signal transmis pendant une durée suffisante pour atteindre une coupure nette du signal reçu.

12. Système de commande selon l'une quelconque des revendications précédentes, caractérisé de plus en ce que les moyens de commande de la fréquence pour commander les filtres synchrones dans les récepteurs et l'excitation du thyristor dans l'unité de commande du transmetteur sont synthétisés à partir de la fréquence de secteur du système de distribution électrique, tout d'abord par une multiplication de la fréquence fixée utilisant un circuit (40), multiplicateur de fréquence en boucle de phase fermée suivi par un diviseur variable (41) pour produire une pluralité de fréquences de commande.

13. Système de commande selon l'une quelconque des revendications précédentes, caractérisé de plus en ce que ledit transmetteur (20) est relié à l'alimentation dudit système de distribution et le signal transmis est transmis par ledit système de distribution à un consommateur comme signal de tension.

14. Système de commande selon l'une quelconque des revendications 1 à 12, caractérisé de plus en ce que ledit transmetteur est relié au consommateur dudit système de distribution, et le signal transmis est transmis par ledit système de distribution à l'alimentation comme signal de courant.

15. Système de commande selon la revendication 14, caractérisé de plus par un transformateur de courant (47) à l'alimentation transformant ledit signal de courant en un signal de tension qui est adressé audit récepteur.

16. Procédé pour transmettre et recevoir un signal d'un système de commande à superposition de fréquence, caractérisé en ce qu'il inclut la discrimination du signal transmis au récepteur par des moyens de discrimination (44) revendiqués dans l'une quelconque des revendications précédentes.

SYSTEM SOURCE IMPEDANCE Ls
11kV BUS IN SUBSTATION
20
21
I2
I1
L
24
22
28
SYSTEM GENERATORS
C
25
TRANSMITTER CONTROL UNIT
26
26
THYRISTORS
11000/430V TRANSFORMER
29

FIG 1

POWER SYSTEM VOLTAGE V(50Hz)
27
LOAD CURRENT I1

FIG 2

SUBSTATION TRANSFORMER
DISTRIBUTION TRANSFORMER
11kv FEEDER
INCOMING
66kV LINE
22
66kV
11kV
23
11kV
415V
21
RECEIVER
28
11kV
TRANSMITTER
TRANSFORMER 100kVA
415V
LC
LOADS
26
26
26
29
TRANSMITTER
CONTROL
UNIT

FIG 3

32
240V SUPPLY
SYNCHRONOUS FILTER
SIGNAL MEASUREMENT
COMPUTATION & LOGIC (MICRO-COMPUTER)
OUTPUT BISTABLE CONTACT'R
CONTACT SENSE
CURRENT SENSE
POWER SUPPLY
FREQUENCY SYNTHESISER
33

FIG 4

33
220
0·47uF
240V AC SUPPLY
24V
1000
10
V. REG
+24V
+5V
+2 52V
+2·5V
0V

FIG 5

42
240V
50Hz
INPUT
4046
D1
PC OUT
VCO
LOW PASS FILTER
30
40
PHASE
LOCKED
LOOP
41
D5 & D6
÷ $K_D$
C
÷4
D7
÷4
$F_c$
$F_c$ /90°
VCO IN
VCO OUT
D2
÷ 16384
C
D3 & D4
DATA SELECTORS
CONTROL LINES
FROM
MICROCOMPUTER
16 PROGRAMMING
INPUTS
TO MICROCOMPUTER
FOR OUT OF LOCK
DETECTION

FIG 6

$F_c$
35
35
$R_1$
$R_2$
P
$C_1$
$C_2$
TO SIGNAL
MEASUREMENT
CIRCUIT
$R_1$
$R_2$
Q
$C_1$
$C_2$
35
$F_c$ /90°

FIG 7

Output From
Synchronous
Filter S
Large Signal
Transmitted signal terminated
by phase reversal for 0·6
No reversal to
terminate transmitted
Signal
Small Signal
Threshold
Minimum duration above threshold
Maximum duration above threshold

FIG 8

36
44
D12
BUFFER
D11
BUFFER
MICRO-
COMPUTER
P
Q
N1
COMPARATOR
N2
OP AMP

FIG 9

S = $\sqrt{P^2 + Q^2}$
P
Q
Threshold for S
O
$F_T$
$F_P$
$F_Q$
R
Logic to develop rejection Signal R
Signal not rejected during this period

FIG 10

PRIOR ART
SYNCHRONOUS CORRELATORS WITHOUT BANDWIDTH LIMIT (AUST PAT. 531592)
SYNCHRONOUS CORRELATORS WITH BANDWIDTH LIMIT
350
360
370
380
390
400
410
420
430
440
450
Hz
FREQUENCY
0
-10
-20
-30
dB
Attenuation

FIG 11

+5V
I
TO MICROCOMPUTER
+2·5V
+2·52V
COMPARATOR

FIG 12

43
+5V
C
TO MICROCOMPUTER

FIG 13

66/11 KV
SUBSTATION TRANSFORMER
DISTRIBUTION
TRANSFORMER
SOURCE
47
11KV CURRENT TRANSFORMER
240V
50 Hz SERIES RESONANT
Fc Hz PARALLEL RESONANT
11KV
FEEDER
46
TRANSMITTER
AT CONSUMER
RECEIVER
SUBSTATION

FIG 14

32
PHASE LOCKED LOOP FREQUENCY MULTIPLIER
34
DATA SELECTOR FOR FREQUENCY DIVIDER
FREQUENCY DIVIDER
PHASE SPLITTER
SYNCHRONOUS FILTER
35
SIGNAL MEASUREMENT (ADC)
36
D1
D2
D3
D4
D5
D6
DATA SELECTOR
CNTR
PLL
240V AC
470K
LINK TO +5V OR 0V AS REQUIRED
MSB GROUP SELECT
LSB

FIG 15A

32
37
38
39
33
PHASE OUTPUT TO LOAD
CURRENT SENSE TRANSFORMER
CURRENT SENSE
CONTACT SENSE
POWER SUPPLY
BISTABLE IMPULSE CONTACTOR
PHASE INPUT
PHASE INPUT 240V AC
NEUTRAL
240VAC
REG
N3
8 BIT MICROCOMPUTER
D13
P20
INT
P15
RESET
P17
P10
P11
P14
P12
P13
P00
P01
P02
P03
P04
P05
P06
P07
XTAL 1
P16
IN5060
IN5060
+24V
+5V
+2.5V
+2.52V
0V
K1
3.3K
23.7K
1000
10
0.47
220 1W

FIG 15B

50 Hz Supply = V
θ
50 Hz pattern control signal = V'
Current in LC circuit
FIG 16
+
-
FIG 17
-
+
V'
FIG 18
Current in LC circuit
V'
FIG 19
Current in LC circuit